# EUROPÄISCHE PATENTSCHRIFT

(11) **EP 0 618 419 B1**
(45) Veröffentlichungstag und Bekanntmachung des Hinweises auf die Patenterteilung: **24.09.1997**
(21) Anmeldenummer: 94105045.2
(22) Anmeldetag: 30.03.1994
(51) Int. Cl.: F27B 1/18, C21B 3/04, C22B 7/02

(54) **Verfahren zum Entsorgen von Staub im Kupolofen durch Verbrennen/Verschlack**
Process for the disposal of dust in a cupola by combustion/slag production
Procédé pour éliminer les poussières d'un cubilot par incinération/formation de laitier

(30) Priorität: 02.04.1993 DE 4310931
(43) Veröffentlichungstag der Anmeldung: 05.10.1994
(73) Patentinhaber: AIR PRODUCTS GmbH, D-45523 Hattingen (DE); Buderus Guss GmbH, D-35576 Wetzlar (DE)
(72) Erfinder: Frielingsdorf, Othmar, D-65719 Hofheim (DE); Künze, Manfred, D-65599 Dornburg (DE); Juranek, Peter, D-45144 Essen (DE)
(74) Vertreter: Marx, Lothar, Dr.

(56) Entgegenhaltungen:
- EP-A- 0 336 121
- EP-A- 0 504 700
- WO-A-88/05149
- LU-A- 87 961
- US-A- 3 701 517

## Beschreibung

### FIELD OF THE INVENTION

The invention concerns a process as well as the use of an oxy-fuel burner for the combustion of and/or slag production from dust in the melting zone of a cupola.

### BACKGROUND OF THE INVENTION

From the German disclosure DE-OS 41 09 214, one process for the operation of a cupola is well-known. By this process the-dust filtered out from the cupola stack gas (combustion gas) is supplied to the furnace either through the furnace air or through its own individual supply system with separate transport gas into the same area as the air supply. In this manner, the dust is used as slag forming material.

By supplying cold filter dust using a cold transport medium, the temperature of the furnace is reduced in the vicinity of the place where the dust and its transport medium are introduced: i.e., by the process described in the above-named disclosure. This adversely affects the furnace operation.

In the June 1966 edition of the journal "Modern Castings", the use of oxy-fuel burners with separate oxygen supplies which are installed in the tuyeres of a cupola is described. The oxy-fuel burners serve as an additional control for increasing temperature in the cupola melting zone and can cause a noticeable increase in the furnace melting rates. A disadvantage of using oxy-fuel burners in the process described in this article, is that full utilization of the oxy-fuel burner capabilities is not fully explored. Oxy-fuel burners certainly improve some cupola operating parameters, but it is not possible without furnace modification to supply necessary material to control slag formation and simultaneously to dispose of the dust which results from combustion. The heat of the oxy-fuel burner used in the process described in the article makes it impossible to utilize dust supply without adversely affecting furnace temperature. Also it is not possible, with the oxy-fuel burner discussed in the article, to eliminate further carburization of the furnace entrance zone through the use of coke dust as fuel.

From WO 88/05149 a process for the disposal of dust by slag production in a cupola is known. The dust is introduced into the melting zone via a hot-air supply and an injection-tuyere. It is, however, not proposed in this document to feed the dust to the flame of an oxy-fuel-burner. LU-A-0 087 961 describes the injection of coal-powder via injectors and oxygen into a combustion flame of a burner in order to create a reducing atmosphere. The problem of the disposal of dust remains unsolved by the disclosure of this document.

### SUMMARY OF THE INVENTION

In the present invention, there is attempt to solve this problem by including an additional oxygen supply, so that the temperature reduction in the boundary region is halted. (This has the disadvantage of resulting in a large expense in the production and operating costs of the furnace as a result of using the process.)

The goal of the present invention is to introduce a process for the disposal of dust in a cupola by combustion of and/or slag production from dust and the use of an oxy-fuel burner for the combustion and/or slag production from dust in the melting zone of a cupola, which no longer exhibits the disadvantage specified above. In particular the disposal should not adversely influence the cupola operation.

The dust to be disposed of is supplied to the flame of an oxy-fuel burner before it reaches the melting zone. The device used in the present invention shows an oxy-fuel burner which has an arrangement to supply dust to its flame. An additional aspect of the invention is the use of an oxy-fuel burner integrated in the tuyeres of a cupola for the combustion and/or slag production from dust in the melting zone of a cupola.

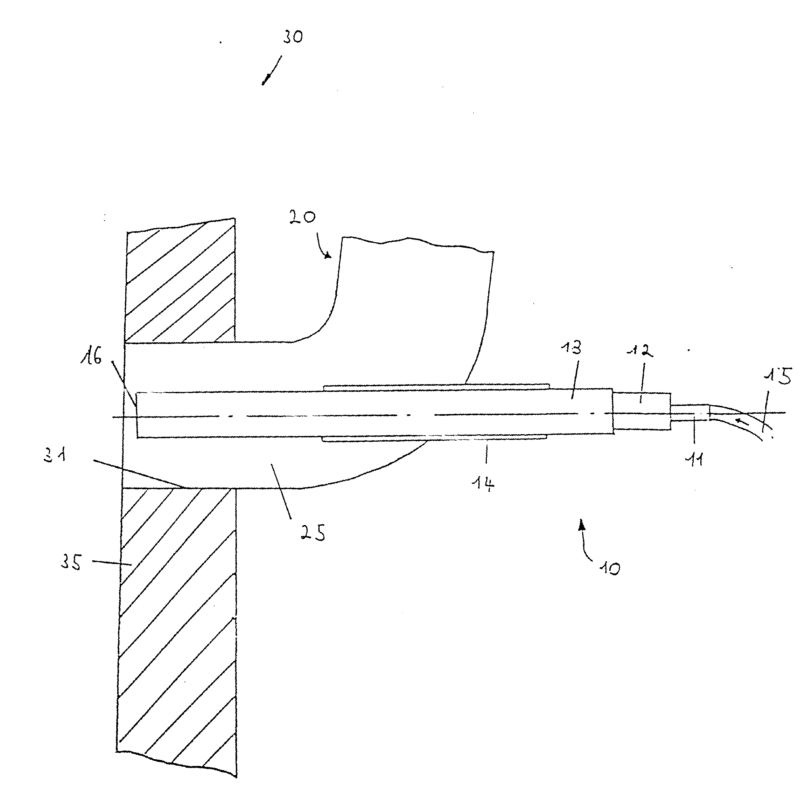

### BRIEF DESCRIPTION OF THE DRAWING

The single figure is a schematic cross-section through the cupola wall at the place at which the tuyere joins the furnace interior and shows schematically one oxy-fuel burner with dust supply installed in this tuyere.

### DETAILED DESCRIPTION OF THE INVENTION

The advantages of the process according to the present invention are based on the fact that dust which results from cast iron production, in particular in the cupola itself, can be disposed of in the cupola cost-effectively; the dust is supplied to the flame of an oxy-fuel burner and in this way to the melting zone of the cupola. Also the degree of iron-carburization can be adjusted through the use of coke dust as fuel for the oxy-fuel burner in a well-controlled manner. A further advantage of the process is that through the introduction of dust into the cupola no cooldown of the cupola internals results which adversely affects the operation. Since the dust to be disposed of almost always consists of a material that can be used for the formation of a slag, a further advantage of the invention lies in that the possibility of controlling the amount of slag in the furnace is provided by the dust supply to the burner.

The device used in the present invention, contains at least one oxy-fuel burner for the disposal of dust by combustion and/or slag production in a cupola through an arrangement for the supply of dust to the flame of the, or each, oxy-fuel burner. This makes it possible to carry out the above-described process advantageously. The oxy-fuel burner(s) is (are) arranged in a tuyere or in an opening which lies in the tuyere area and is (are) able to supply the dust to be disposed of to the furnace without negatively impacting its operation. The supply arrangement for the dust, in combination with the fuel supply can perform the introduction of slag-forming or (carburization-promoting) furnace additions in an advantageous manner, so that through, in particular, a symmetrical supply layout of this material the furnace content can be adjusted to the desired slag and carburization value.

The use of an oxy-fuel burner for the combustion and/or slag production from dust in the melting zone of a cupola is an advantageous use of the above-described device as well as the above-described process.

In this manner a costly special disposal of the by-product waste dust is eliminated, while its recyclable portion can be utilized optimally, without influencing the furnace operation through cooldown.

The process for the disposal of dust in a cupola by combustion and/or slag formation, whereby the dust is supplied to the flame of at least one oxy-fuel burner, can be accomplished such that the flame of the oxy-fuel burner is produced in the melting zone of the cupola. It is possible to use natural gas, oil, or coke dust as the fuel. The dust can be supplied to the flame of the oxy-fuel burner through at the least one tuyere of the cupola, but also the possibility exists to supply the dust to the flames of the oxy-fuel burners through several tuyeres, advantageously located symmetrically on the cupola.

A further possibility to use the process of the present invention exists in that the dust can be supplied to the flame of the oxy-fuel burner through ports in the cupola wall. In this example at least one oxy-fuel burner arranged in a port of the cupola wall is used; however, the possibility exists to use several oxy-fuel burners in this way and to arrange them in an advantageous manner symmetrically around the cupola wall.

Each of the above-described processes can be characterized in that the dust is supplied through a pipe which is integrated in the oxy-fuel burner .The supply of dust can be transported to the flame of the oxy-fuel burner pneumatically in all cases. Therefore, it is possible to install air or oxygen as the pneumatic transport medium.

The device used for carrying out the process for the disposal of dust in a cupola by combustion and/or slag production according to the invention has at least one oxy-fuel burner and at least one arrangement for the supply of dust to the flame of each oxy-fuel burner. With the device described above, the oxy-fuel burners can be arranged in a cupola tuyere or in a port in the cupola wall. It is also possible to supply the dust through a dedicated tube which is arranged in the burner pipe of the oxy-fuel burner. By the device described above, a tube can be arranged in a cupola tuyere or in a port in the cupola wall for the pneumatic supply of dust.

With a device consisting of several oxy-fuel burners and/or arrangements for the supply of dust, it is an advantage to arrange these symmetrically around the circumference of the cupola, in order to guarantee an even, homogeneous heat and material supply.

One oxy-fuel burner integrated into the cupola tuyere can be used in accordance with a further aspect of the invention for the combustion and/or slag production of dust in the melting zone of a cupola.

The invention will be further described with reference to the single figure of the drawing.

Referring to the drawing, an oxy-fuel burner shown generally as 10 is supplied with an apparatus for the introduction of dust. Oxy-fuel burner 10 is disposed in a tuyere 20. Tuyere 20 extends through wall 35 of the cupola, represented as 30. The burner 10 includes a tube 11 for the dust supply which is surrounded by a coaxial tube 12 which serves as the oxygen pipe. A coaxial pipe 13 for the fuel supply surrounds the pipes 11 or 12. A dust supply tube 15 introduces dust into dust supply pipe 11. The connections for the supply of fuel or oxygen (not shown) are along on the unused, open surface of tubes 12 and 13, as is well known in the art. The transport medium for dust can also be supplied differently than in the burner described above. For example, oxygen or gas can also be used as the dust transport medium in which case it will be introduced into the burner 10 via pipe 11 as well as or in place of using pipe 12. The same is true for supplying fuel through pipe 13.

The oxy-fuel burner consisting of pipes 11, 12, and 13 includes a pipe 14 which surrounds a portion of the circumference of the burner and facilitates installation of its burner, in particular axially, in the tuyere 20. The tuyere 20 includes a water-cooled nozzle 16 for introducing the oxy-fuel frame and dust into the interior (30i) of cupola 30.

The furnace-side of the nozzle 16 of the oxy-fuel burner 10 is approximately in the center of the opening 31 of the wall 35 of the cupola 30. The end of the nozzle 16 of the oxy-fuel burner 10 is located a (short) distance away from the mouth of the tuyere 20 of the cupola 30. The nozzle 16 of the oxy-fuel burner can also be installed flush with the mouth of the tuyere 20. The tuyere 20 penetrates wall 35 of the cupola 30 and is positioned to introduce air into the melting zone of the cupola 30.

The dust to be processed is supplied to the oxy-fuel burner 10 through the supply tube 15 and the dust supply pipe 11. Through the oxygen and fuel supplies the oxygen and fuel reach the appropriate pipes 12 and 13 of the burner 10. As the result of combustion of fuel by the oxy-fuel burner 10 the dust is heated in the flame in the furnace interior so that the undesired cooling process which adversely affects furnace operation (expected with the introduction of cold dust by a cold transport medium) disappears. The components contained in the supplied gas and particle stream as additional slag or coke make good regulation of the melt composition in the furnace possible.

Natural gas, heating oil, or coke dust can be used as fuel for the burner 10.

Through controlled operation of the oxy-fuel burner the desired influence on the furnace temperature can be achieved.

Under the classification "introduced dust" are all of the dust-forming residuals and/or recyclings obtained in the foundry understood (implied).

## Patentansprüche

1. Verfahren zum Entsorgen von Stäuben durch Verbrennen und/oder Verschlacken in einem Kupol-Ofen,
**dadurch gekennzeichnet**, daß
die Stäube der Flamme mindestens eines Sauerstoff-Brenners zugeführt werden, bevor diese Stäube die Schmelzzone des Kupol-Ofens erreichen.

2. Verfahren nach Anspruch 1, dadurch gekennzeichnet, daß die Flamme des Sauerstoff-Brenners in der Schmelzzone des Kupol-Ofens erzeugt wird.

3. Verfahren nach einem der Ansprüche 1 oder 2, dadurch gekennzeichnet, daß der Sauerstoff-Brenner mit Erdgas, Heizöl oder Kohlenstaub als Brennstoff gespeist wird.

4. Verfahren nach einem der Ansprüche 1 bis 3, dadurch gekennzeichnet, daß die Stäube der Flamme des Sauerstoff-Brenners über mindestens eine Winddüse des Kupol-Ofens zugeführt werden.

5. Verfahren nach einem der Ansprüche 1 bis 3, dadurch gekennzeichnet, daß die Stäube der Flamme des Sauerstoff-Brenners über Löcher in der Wand des Kupol-Ofens zugeführt werden.

6. Verfahren nach einem der Ansprüche 1 bis 5, dadurch gekennzeichnet, daß die Stäube über ein in den Sauerstoff-Brenner integriertes Rohr zugeführt werden.

7. Verfahren nach einem der Ansprüche 1 bis 6, dadurch gekennzeichnet, daß mindestens ein in einem Loch der Kupol-Ofenwand angeordneter Sauerstoff-Brenner verwendet wird.

8. Verfahren nach einem der Ansprüche 1 bis 6, dadurch gekennzeichnet, daß mindestens ein in einer Winddüse des Kupol-Ofens angeordneter Sauerstoff-Brenner verwendet wird.

9. Verfahren nach einem der Ansprüche 1 bis 8, dadurch gekennzeichnet, daß die Stäube der Flamme des Sauerstoff-Brenners pneumatisch zugeführt werden.

10. Verfahren nach Anspruch 9, dadurch gekennzeichnet, daß als pneumatisches Fördermittel Luft oder Sauerstoff eingesetzt wird.

11. Verfahren nach Anspruch 10, dadurch gekennzeichnet, daß als Stäube beliebige in der Gießerei anfallende staubförmige Reststoffe eingesetzt werden.

12. Verwendung eines in die Winddüse eines Kupol-Ofens integrierten Sauerstoff-Brenners zum Entsorgen von Stäuben durch Verbrennen und/oder Verschlacken von Stäuben in der Schmelzzone des Kupol-Ofens.

## Claims

1. A process for the disposal of dust by combustion and/or slag production in a cupola, wherein the dust is supplied to the flame of at least one oxy-fuel burner disposed in said cupola before said dust reaches the melting zone of said cupola.

2. The process of Claim 1, wherein the flame of the oxy-fuel burner is produced in the melting zone of the cupola.

3. The process of Claim 1, wherein the oxy-fuel burner is fed with natural gas, heating oil, or coal dust as the fuel.

4. The process of Claim 1, wherein the dust is supplied to the flame of the oxy-fuel burner disposed in a tuyere of the cupola.

5. The process of Claim 1, wherein the dust is supplied to the flame of the oxy-fuel burner through ports in the wall of the cupola.

6. The process of Claim 1, wherein the dust is supplied through a pipe integrated with the oxy-fuel burner.

7. The process of Claim 1, wherein said oxy-fuel burner is arranged in a port of the cupola wall.

8. The process of Claim 1, wherein the dust is supplied to the flame of the oxy-fuel burner pneumatically.

9. The process of Claim 8, wherein air is the pneumatic fluidization medium.

10. The process of Claim 8, wherein oxygen is the pneumatic fluidization medium.

11. The process of Claim 1, wherein any dust-forming residual material produced in the foundry can be utilized as the dust for this process.

## Revendications

1. Un procédé pour l'élimination de la poussière par combustion et/ou formation de laitier, dans lequel la poussière est introduite dans la flamme d'au moins un brûleur oxycombustible disposé dans ledit cubilot avant que ladite poussière atteigne la zone de fusion dudit cubilot.

2. Procédé selon la revendication 1, dans lequel la flamme du brûleur oxycombustible est produite dans la zone de fusion du cubilot.

3. Procédé selon la revendication 1, dans lequel le brûleur oxycombustible est alimenté par du gaz naturel, du mazout ou de la poussière de charbon en tant que combustible.

4. Procédé selon la revendication 1, dans lequel la poussière est introduite dans la flamme du brûleur oxycombustible placé dans une tuyère du cubilot.

5. Procédé selon la revendication 1, dans lequel la poussière est introduite dans la flamme du brûleur oxycombustible à travers des orifices dans la paroi du cubilot.

6. Procédé selon la revendication 1, dans lequel la poussière est admise à travers un tube intégré au brûleur oxycombustible.

7. Procédé selon la revendication 1, dans lequel ledit brûleur oxycombustible est disposé dans un orifice de la paroi du cubilot.

8. Procédé selon la revendication 1, dans lequel la poussière est introduite dans la flamme du brûleur oxycombustible par voie pneumatique.

9. Procédé selon la revendication 8, dans lequel l'air est le milieu de fluidisation pneumatique.

10. Procédé selon la revendication 8, dans lequel l'oxygène est le milieu de fluidisation pneumatique.

11. Procédé selon la revendication 1, dans lequel toute matière résiduelle génératrice de poussière produite dans la fonderie peut être utilisée comme poussière pour ce procédé.

12. Utilisation d'un brûleur oxycombustible intégré dans les tuyères d'un cubilot pour l'élimination de la poussière par combustion et/ou formation de laitier dans la zone de fusion du cubilot.
